# EUROPÄISCHE PATENTANMELDUNG

(11) **EP 4 427 564 A1**
(43) Veröffentlichungstag der Anmeldung: **11.09.2024**
(21) Anmeldenummer: 24401007.0
(22) Anmeldetag: 26.02.2024
(51) Int. Cl.: A01C 7/06, A01C 21/00

(54) **VERFAHREN ZUM EINSTELLEN DER MATERIALAUSBRINGUNG EINER LANDWIRT SCHAFTLICHEN AUSBRINGMASCHINE UND AUSBRINGMASCHINE**

(30) Priorität: 07.03.2023 DE 102023105583
(71) Anmelder: Amazonen-Werke H. Dreyer SE & Co. KG, 49205 Hasbergen (DE)
(72) Erfinder: Warns, Felix, 49205 Hasbergen (DE); Hilbert, Florenz, 49205 Hasbergen (DE); Trentmann, Markus, 49205 Hasbergen (DE); Koch, Jens, 49205 Hasbergen (DE); Henke, Christian, 49205 Hasbergen (DE); Lömker, Kevin, 49205 Hasbergen (DE)

(57) **Zusammenfassung**

Die Erfindung betrifft ein Verfahren zum Einstellen der Materialausbringung einer landwirtschaftlichen Ausbringmaschine mittels einer Steuerungseinrichtung (12), wobei mit der landwirtschaftlichen Ausbringmaschine Ausbringmaterial in einem Bandablagebetrieb in Form eines Materialbandes (38) und in einem Portionsablagebetrieb in Form von Materialportionen (40) auf die landwirtschaftliche Nutzfläche (16) ablegbar ist, wobei die Steuerungseinrichtung (12) eine sich auf eine flächenbezogene Sollausbringmenge beziehende Bandablageeinstellvorgabe (30) für die Materialausbringung im Bandablagebetrieb speichert.

## Beschreibung

Die Erfindung betrifft ein Verfahren zum Einstellen der Materialausbringung einer landwirtschaftlichen Ausbringmaschine nach dem Oberbegriff des Patentanspruchs 1 und ein System zum Einstellen der Materialausbringung einer landwirtschaftlichen Ausbringmaschine nach dem Oberbegriff des Patentanspruchs 8.

Aus der Praxis sind landwirtschaftliche Ausbringmaschinen bekannt, mittels welchen Ausbringmaterial in einem Bandablagebetrieb in Form eines Materialbandes und in einem Portionsablagebetrieb in Form von Materialportionen auf die landwirtschaftliche Nutzfläche ablegbar sind. Bei derartigen Ausbringmaschinen hat der Maschinenbediener bisher die Möglichkeit, eine flächenbezogene Sollausbringmenge, beispielsweise in Kilogramm pro Hektar (kg/ha) über ein Bedienterminal einzustellen. Anhand der eingestellten Sollausbringmenge wird dann beispielsweise eine Materialfördereinrichtung zum maschineninternen Fördern des Ausbringmaterials derart angesteuert, dass die flächenbezogene Sollausbringmenge an Ausbringmaterial zu Ablageeinrichtungen der Ausbringmaschine gefördert wird.

In einer Vielzahl von Anwendungsfällen kann bei der Ablage des Ausbringmaterials in Form von Materialportionen eine geringere flächenbezogene Ausbringmenge an Ausbringmaterial im Vergleich zur Bandablage auf die landwirtschaftliche Nutzfläche ausgebracht werden.

Insbesondere bei schlechter Materialqualität, beispielsweise bei feuchtem, klumpigem oder Störkörper aufweisendem granularem Ausbringmaterial kann die Portionsbildung problembehaftet sein, sodass in einigen Situationen eine konventionelle beziehungsweise kontinuierliche Bandablage des Ausbringmaterials gewünscht ist. Die konventionelle Bandablage ist häufig auch bei Brems- und Beschleunigungsvorgängen während der Materialausbringung, beispielsweise beim Übergang ins Vorgewende, der portionsweisen Materialausbringung vorzuziehen. Insofern kann es vorkommen, dass während der Materialausbringung mehrfach zwischen dem Bandablagebetrieb und dem Portionsablagebetrieb umgeschaltet werden muss. Dies erfordert bisher das manuelle Anpassen der flächenbezogenen Sollausbringmenge durch den Maschinenbediener oder führt bei ausbleibender Sollausbringmengenanpassung zur Ausbringung einer ungeeigneten Menge an Ausbringmaterial entweder im Bandablagebetrieb oder im Portionsablagebetrieb.

Die der Erfindung zugrunde liegende Aufgabe besteht also darin, Ausbringvorgänge, in denen Ausbringmaterial sowohl in Form eines Materialbandes als auch in Form von Materialportionen auf die landwirtschaftliche Nutzfläche abgelegt werden soll, zu vereinfachen.

Die Aufgabe wird gelöst durch ein Verfahren der eingangs genannten Art, wobei die Steuerungseinrichtung im Rahmen des erfindungsgemäßen Verfahrens eine sich auf eine flächenbezogene Sollausbringmenge beziehende und sich von der Bandablageeinstellvorgabe unterscheidende Portionsablageeinstellvorgabe für die Materialausbringung im Portionsablagebetrieb speichert.

Dadurch, dass die Steuerungseinrichtung eine sich auf eine flächenbezogene Sollausbringmenge beziehende Bandablageeinstellvorgabe für die Materialausbringung im Bandablagebetrieb und eine sich auf eine flächenbezogene Sollausbringmenge beziehende Portionsablageeinstellvorgabe für die Materialausbringung im Portionsablagebetrieb speichert, stehen während der Materialausbringung ablagebetriebsbezogene Einstellvorgaben zur Verfügung, welche die Steuerungseinrichtung in Abhängigkeit des aktuellen Ablagebetriebs einstellen kann. Während der Materialausbringung kann somit eine für die Bandablage optimale Ausbringmenge und eine für die Portionsablage optimale Ausbringmenge umgesetzt werden, ohne dass der Maschinenbediener wiederholt entsprechende Sollausbringmengen während des Ausbringvorgangs über das Bedienterminal eingeben muss.

Die Bandablageeinstellvorgabe bezieht sich vorzugsweise auf eine andere flächenbezogene Sollausbringmenge als die Portionsablageeinstellvorgabe. Bei der Portionsablage kann üblicherweise eine geringere flächenbezogene Sollausbringmenge ausgebracht werden, ohne dass dies das Wachstum und/oder die Nährstoffversorgung der Nutzpflanzen beeinträchtigt.

In einer bevorzugten Ausführungsform des erfindungsgemäßen Verfahrens steuert die Steuerungseinrichtung eine Materialfördereinrichtung zum maschineninternen Fördern des Ausbringmaterials. Die Steuerungseinrichtung steuert die Materialfördereinrichtung im Bandablagebetrieb in Abhängigkeit der Bandablageeinstellvorgabe und im Portionsablagebetrieb in Abhängigkeit der Portionsablageeinstellvorgabe an. Die Materialfördereinrichtung kann beispielsweise ein Gebläse umfassen, mittels welchem ein Förderluftstrom zum maschineninternen Fördern des Ausbringmaterials erzeugt wird. Aus der Bandablageeinstellvorgabe kann die Steuerungseinrichtung beispielsweise eine Gebläsedrehzahlvorgabe ableiten, welche von der Steuerungseinrichtung im Bandablagebetrieb eingestellt wird. Aus der Portionsablageeinstellvorgabe kann die Steuerungseinrichtung beispielsweise eine Gebläsedrehzahlvorgabe ableiten, welche von der Steuerungseinrichtung im Portionsablagebetrieb eingestellt wird.

In einer Weiterbildung des erfindungsgemäßen Verfahrens schaltet die Steuerungseinrichtung während einer Ausbringung von Ausbringmaterial zwischen dem Bandablagebetrieb, in welchem die Materialfördereinrichtung in Abhängigkeit der Bandablageeinstellvorgabe angesteuert wird, und dem Portionsablagebetrieb, in welchem die Materialfördereinrichtung in Abhängigkeit der Portionsablageeinstellvorgabe angesteuert wird, um. Beim Umschalten zwischen dem Bandablagebetrieb und dem Portionsablagebetrieb kommt es somit beispielsweise zu einer Volumenstromänderung, bei der durch die Materialfördereinrichtung erzeugten Förderluftströmung, da im Bandablagebetrieb und im Portionsablagebetrieb voneinander abweichende flächenbezogene Mengen an Ausbringmaterial auf die landwirtschaftliche Nutzfläche abgelegt werden sollen. Wenn die Materialfördereinrichtung als Gebläse ausgebildet ist, ändert sich beim Umschalten zwischen dem Bandablagebetrieb und dem Portionsablagebetrieb beispielsweise die Gebläsedrehzahl des Gebläses.

In einer anderen bevorzugten Ausführungsform des erfindungsgemäßen Verfahrens wird das Umschalten zwischen dem Bandablagebetrieb und dem Portionsablagebetrieb selbsttätig, insbesondere unter Berücksichtigung von Ablageinformationen aus einer Applikationskarte, durch die Steuerungseinrichtung veranlasst. Die Ablageinformationen aus der Applikationskarte können einerseits Flächenabschnitte ausweisen, in welchen das Ausbringmaterial portionsweise ausgebracht werden soll, und andererseits Flächenabschnitte ausweisen, in welchen das Ausbringmaterial im Band ausgebracht werden soll. Über einen Abgleich der Position der Ausbringmaschine auf der landwirtschaftlichen Nutzfläche kann festgestellt werden, ob sich die landwirtschaftliche Ausbringmaschine in einem Flächenabschnitt befindet, in welchem das Ausbringmaterial portionsweise ausgebracht werden soll, oder in einem Flächenabschnitt befindet, in welchem das Ausbringmaterial im Band ausgebracht werden soll. Abhängig davon, in welchem Flächenabschnitt sich die Ausbringmaschine befindet, kann die Steuerungseinrichtung dann den Bandablagebetrieb oder den Portionsablagebetrieb selbsttätig einstellen. Beim selbsttätigen Umschalten zwischen dem Bandablagebetrieb und dem Portionsablagebetrieb erfolgt auch ein Umstellen der flächenbezogenen Sollausbringmenge, da dem Bandablagebetrieb eine andere flächenbezogene Sollausbringmenge zugeordnet ist als dem Portionsablagebetrieb. Alternativ oder zusätzlich wird das Umschalten zwischen dem Bandablagebetrieb und dem Portionsablagebetrieb durch eine die Umschaltung betreffende Steuerungsmaßnahme des Maschinenbedieners veranlasst. Die die Umschaltung betreffende Steuerungsmaßnahme des Maschinenbedieners kann beispielsweise über die Eingabe an einem Bedienterminal veranlasst werden. Der Maschinenbediener kann beispielsweise durch Berühren einer Schaltfläche, eines Displaybereichs oder eines anderen Steuerungselements des Bedienterminals eine Umschaltung von Bandablagebetrieb auf Portionsablagebetrieb oder die Umschaltung von Portionsablagebetrieb auf den Bandablagebetrieb veranlassen.

Es ist darüber hinaus ein erfindungsgemäßes Verfahren bevorzugt, bei welchem die Steuerungseinrichtung die sich durch das Umschalten zwischen dem Bandablagebetrieb und dem Portionsablagebetrieb während der Materialausbringung ergebende Mengendifferenz an für die landwirtschaftliche Nutzfläche erforderlichem Ausbringmaterial ermittelt. Vorzugsweise ermittelt die Steuerungseinrichtung die sich durch geplante Umschaltvorgänge zwischen dem Bandablagebetrieb und dem Portionsablagebetrieb während der Materialausbringung ergebende für die landwirtschaftliche Nutzfläche erforderliche Gesamtmaterialmenge an Ausbringmaterial. Durch das Ermitteln der Mengendifferenz kann dem Maschinenbediener mitgeteilt werden, welche Menge an Ausbringmaterial er durch die Kombination von Bandablagebetrieb und Portionsablagebetrieb während der Materialausbringung einspart. Durch das Ermitteln der Gesamtmaterialmenge an Ausbringmaterial kann der Maschinenbediener eine auf die erforderliche Materialmenge abgestimmte Beladung der Ausbringmaschine mit Ausbringmaterial durchführen, sodass im Wesentlichen die Menge an Ausbringmaterial mitgeführt wird, die für den Ausbringvorgang erforderlich ist. Hierdurch wird erreicht, dass die gesamte mitgeführte Menge an Ausbringmaterial nach Beendigung des Ausbringvorgangs auf der landwirtschaftlichen Nutzfläche ausgebracht wurde. Somit entfällt eine zeit- und kostenaufwändige Entleerung der Ausbringmaschine und gegebenenfalls die Entsorgung zu viel mitgeführten Ausbringmaterials.

In einer weiteren bevorzugten Ausführungsform des erfindungsgemäßen Verfahrens verarbeitet die Steuerungseinrichtung zum Speichern der Bandablageeinstellvorgabe eine sich auf die flächenbezogene Sollausbringmenge für die Materialausbringung im Bandablagebetrieb beziehende Benutzereingabe. Alternativ oder zusätzlich verarbeitet die Steuerungseinrichtung zum Speichern der Portionsablageeinstellvorgabe eine sich auf die flächenbezogene Sollausbringmenge für die Materialausbringung im Portionsablagebetrieb beziehende Benutzereingabe. Die sich auf die flächenbezogene Sollausbringmenge beziehende Benutzereingabe für die Materialausbringung im Bandablagebetrieb kann ein sich auf eine flächenbezogene Sollausbringmenge beziehender Mengeneinstellwert, beispielsweise in kg/ha, sein. Die sich auf die flächenbezogene Sollausbringmenge beziehende Benutzereingabe für die Materialausbringung im Portionsablagebetrieb kann ein sich auf eine flächenbezogene Sollausbringmenge beziehender Mengeneinstellwert, beispielsweise in kg/ha, sein. Die sich auf die flächenbezogene Sollausbringmenge beziehende Benutzereingabe für die Materialausbringung im Bandablagebetrieb kann ein Änderungswert sein, mit welchem die Steuerungseinrichtung den Mengeneinstellwert für die Materialausbringung im Bandablagebetrieb aus dem Mengeneinstellwert für die Materialausbringung im Portionsablagebetrieb ermittelt. Die sich auf die flächenbezogene Sollausbringmenge beziehende Benutzereingabe für die Materialausbringung im Portionsablagebetrieb kann ein Änderungswert sein, mit welchem die Steuerungseinrichtung den Mengeneinstellwert für die Materialausbringung im Portionsablagebetrieb aus dem Mengeneinstellwert für die Materialausbringung im Bandablagebetrieb ermittelt.

In einer anderen bevorzugten Ausführungsform des erfindungsgemäßen Verfahrens verarbeitet die Steuerungseinrichtung zum Speichern der Bandablageeinstellvorgabe einen sich auf die flächenbezogene Sollausbringmenge für die Materialausbringung im Bandablagebetrieb beziehenden Eintrag in einer Applikationskarte. Alternativ oder zusätzlich verarbeitet die Steuerungseinrichtung zum Speichern der Portionsablageeinstellvorgabe einen sich auf die flächenbezogene Sollausbringmenge für die Materialausbringung im Portionsablagebetrieb beziehenden Eintrag in einer Applikationskarte. Der sich auf die flächenbezogene Sollausbringmenge beziehende Eintrag in der Applikationskarte für die Materialausbringung im Bandablagebetrieb kann ein sich auf eine flächenbezogene Sollausbringmenge beziehender Mengeneinstellwert, beispielsweise in kg/ha, sein. Der sich auf die flächenbezogene Sollausbringmenge beziehende Eintrag in der Applikationskarte für die Materialausbringung im Portionsablagebetrieb kann ein sich auf die flächenbezogene Sollausbringmenge beziehender Mengeneinstellwert, beispielsweise in kg/ha, sein. Alternativ kann die Steuerungseinrichtung einen sich auf die flächenbezogene Sollausbringmenge für die Materialausbringung im Bandablagebetrieb beziehenden Eintrag in einer Applikationskarte zum Einstellen der Portionsablageeinstellvorgabe verarbeiten.

Die gespeicherte Bandablageeinstellvorgabe und/oder die gespeicherte Portionsablageeinstellvorgabe können beispielsweise den jeweiligen flächenbezogenen Sollausbringmengen entsprechen oder aus diesen abgeleitet sein. Die gespeicherte Bandablageeinstellvorgabe und/oder die gespeicherte Portionsablageeinstellvorgabe können auch Steuerungsparameter oder Kennwerte sein, welche sich auf die jeweiligen flächenbezogenen Sollausbringmengen beziehen.

Die der Erfindung zugrunde liegende Aufgabe wird ferner durch ein System der eingangs genannten Art gelöst, wobei die Steuerungseinrichtung des erfindungsgemäßen Systems dazu eingerichtet ist, eine sich auf die flächenbezogene Sollausbringmenge beziehende und sich von der Bandablageeinstellvorgabe unterscheidende Portionsablageeinstellvorgabe für die Materialausbringung im Portionsablagebetrieb zu speichern. Mittels des Systems ist vorzugsweise das Verfahren zum Einstellen der Materialausbringung nach einer der vorstehend beschriebenen Ausführungsformen ausführbar. Hinsichtlich der Vorteile und Modifikationen des erfindungsgemäßen Systems wird somit zunächst auf die Vorteile und Modifikationen des erfindungsgemäßen Verfahrens verwiesen.

In einer bevorzugten Ausführungsform weist das erfindungsgemäße System eine Materialfördereinrichtung zum maschineninternen Fördern des Ausbringmaterials auf, wobei die Steuerungseinrichtung dazu eingerichtet ist, die Materialfördereinrichtung im Bandablagebetrieb in Abhängigkeit der Bandablageeinstellvorgabe und im Portionsablagebetrieb in Abhängigkeit der Portionsablageeinstellvorgabe anzusteuern. Die Materialfördereinrichtung kann ein Gebläse umfassen, welches dazu eingerichtet ist, einen Förderluftstrom zum maschineninternen Fördern des Ausbringmaterials zu erzeugen. Der von der Materialfördereinrichtung erzeugte Förderluftstrom weicht im Bandablagebetrieb von dem von der Materialfördereinrichtung erzeugten Förderluftstrom im Portionsablagebetrieb ab. Die Steuerungseinrichtung ist vorzugsweise dazu eingerichtet, auf Grundlage der Bandablageeinstellvorgabe und der Portionsablageeinstellvorgabe im Bandablagebetrieb und im Portionsablagebetrieb unterschiedliche Gebläsedrehzahlen an der Materialfördereinrichtung einzustellen.

Das erfindungsgemäße System wird ferner dadurch vorteilhaft weitergebildet, dass die Steuerungseinrichtung dazu eingerichtet ist, während einer Ausbringung von Ausbringmaterial, insbesondere selbsttätig und/oder auf Grundlage einer Steuerungsmaßnahme eines Maschinenbedieners, zwischen dem Bandablagebetrieb, in welchem die Materialfördereinrichtung in Abhängigkeit der Bandablageeinstellvorgabe angesteuert wird, und dem Portionsablagebetrieb, in welchem die Materialfördereinrichtung in Abhängigkeit der Portionsablageeinstellvorgabe angesteuert wird, umzuschalten. Die Steuerungseinrichtung ist vorzugsweise dazu eingerichtet, eine Umschaltung in Abhängigkeit von einem oder mehreren Parametern zu veranlassen. Die Parameter, welche die Steuerungseinrichtung beim selbsttätigen Umschalten berücksichtigt beziehungsweise auswertet, können beispielsweise die aktuelle Fahrgeschwindigkeit der Ausbringmaschine, eine aktuelle Geschwindigkeitsänderung der Ausbringmaschine und/oder den aktuellen Betriebszustand einer Dosiereinrichtung, über welche die Materialportionen im Portionsablagebetrieb erzeugt werden, betreffen. Der Betriebszustand der Dosiereinrichtung kann sich beispielsweise auf die Drehzahl der Dosiereinrichtung beziehen. Die Dosiereinrichtung kann beispielsweise einen Dosierrotor umfassen, welcher zum Erzeugen von Materialportionen eine Rotationsbewegung in einer Dosierkammer ausführt, wobei der Dosierrotor während der Rotationsbewegung das sich in der Dosierkammer befindende Ausbringmaterial einsammelt und zu einer Materialportion zusammenführt. Wenn der Dosierrotor der Dosiereinrichtung aufgrund einer hohen Fahrgeschwindigkeit im Portionsablagebetrieb in der Nähe einer Maximaldrehzahl betrieben wird, kann bei einer weiteren Steigerung der Fahrgeschwindigkeit die Umschaltung auf den Bandablagebetrieb von der Steuerungseinrichtung veranlasst werden.

Das erfindungsgemäße System wird ferner dadurch vorteilhaft weitergebildet, dass die Steuerungseinrichtung eine Eingabevorrichtung für Benutzereingaben umfasst, wobei die Steuerungseinrichtung dazu eingerichtet ist, Eingabefelder für eine sich auf die flächenbezogene Sollausbringmenge für die Materialausbringung im Bandablagebetrieb beziehende Benutzereingabe und eine sich auf die flächenbezogene Sollausbringmenge für die Materialausbringung im Portionsablagebetrieb beziehende Benutzereingabe bereitzustellen. Die Eingabefelder können sich beispielsweise beim Auswählen eines über eine Anzeigevorrichtung der Steuerungseinrichtung angezeigten Flächenabschnitts, beispielsweise durch Berührung eines Displays, öffnen, sodass der Maschinenbediener beispielsweise Sollausbringmengen für den Bandablagebetrieb und/oder den Portionsablagebetrieb eingeben kann.

Das erfindungsgemäße System wird ferner dadurch vorteilhaft weitergebildet, dass die Steuerungseinrichtung dazu eingerichtet ist, die sich auf die flächenbezogene Sollausbringmenge für die Materialausbringung im Bandablagebetrieb beziehende Benutzereingabe zum Ermitteln der Bandablageeinstellvorgabe zu verarbeiten. Alternativ oder zusätzlich ist die Steuerungseinrichtung dazu eingerichtet, die sich auf die flächenbezogene Sollausbringmenge für die Materialausbringung im Portionsablagebetrieb beziehende Benutzereingabe zum Ermitteln der Portionsablageeinstellvorgabe zu verarbeiten. Die Benutzereingabe kann beispielsweise ein Änderungswert sein, welcher zur Berechnung der Bandablageeinstellvorgabe oder der Portionsablageeinstellvorgabe von der Steuerungseinrichtung zu verarbeiten ist.

In einer anderen bevorzugten Ausführungsform des erfindungsgemäßen Systems ist die Steuerungseinrichtung dazu eingerichtet, einen sich auf die flächenbezogene Sollausbringmenge für die Materialausbringung im Bandablagebetrieb beziehenden Eintrag in einer Applikationskarte zum Ermitteln der Bandablageeinstellvorgabe zu verarbeiten. Alternativ oder zusätzlich ist die Steuerungseinrichtung dazu eingerichtet, einen sich auf die flächenbezogene Sollausbringmenge für die Materialausbringung im Portionsablagebetrieb beziehenden Eintrag in einer Applikationskarte zum Ermitteln der Portionsablageeinstellvorgabe zu verarbeiten. Beispielsweise ist die Steuerungseinrichtung dazu eingerichtet, eine Applikationskarte zu laden oder abzurufen und Einträge in der Applikationskarte zum Ermitteln der Bandablageeinstellvorgabe und/oder der Portionsablageeinstellvorgabe zu verarbeiten.

Nachfolgend werden bevorzugte Ausführungsformen der Erfindung unter Bezugnahme auf die beiliegenden Zeichnungen näher erläutert und beschrieben. Dabei zeigen:
- Fig. 1: eine Steuerungseinrichtung eines erfindungsgemäßen Systems zum Einstellen der Materialausbringung einer landwirtschaftlichen Ausbringmaschine in einer schematischen Darstellung;
- Fig. 2: eine Steuerungseinrichtung eines erfindungsgemäßen Systems zum Einstellen der Materialausbringung einer landwirtschaftlichen Ausbringmaschine in einer schematischen Darstellung;
- Fig. 3: ein erfindungsgemäßen System zum Einstellen der Materialausbringung einer landwirtschaftlichen Ausbringmaschine in einer schematischen Darstellung;
- Fig. 4: ein weiteres erfindungsgemäßen System zum Einstellen der Materialausbringung einer landwirtschaftlichen Ausbringmaschine in einer schematischen Darstellung; und
- Fig. 5: ein weiteres erfindungsgemäßen System zum Einstellen der Materialausbringung einer landwirtschaftlichen Ausbringmaschine in einer schematischen Darstellung.

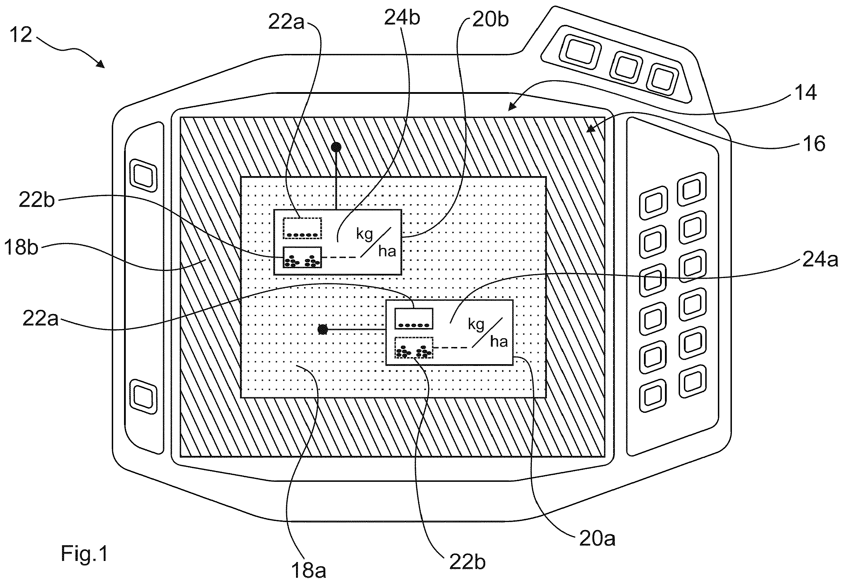

Die Fig. 1 zeigt eine als Bedienterminal ausgebildete Steuerungseinrichtung 12. Die Steuerungseinrichtung 12 umfasst eine elektronische Datenverarbeitungseinrichtung und dient zum Steuern eines Ausbringvorgangs, bei welchem mittels einer landwirtschaftlichen Ausbringmaschine Ausbringmaterial auf eine landwirtschaftliche Nutzfläche 16 abgegeben wird.

Die Steuerungseinrichtung 12 umfasst eine als Touchscreen ausgebildete Eingabevorrichtung 14, über welche ein Maschinenbediener Benutzereingaben vornehmen kann. Auf dem Display des Touchscreens ist ein digitales Abbild einer landwirtschaftlichen Nutzfläche 16 dargestellt, auf welchem Ausbringmaterial, nämlich vorliegend Dünger, ausgebracht werden soll. Die landwirtschaftliche Ausbringmaschine, welche zur Materialausbringung eingesetzt wird, kann dazu eingerichtet sein, gleichzeitig Dünger und Saatgut auf die landwirtschaftliche Nutzfläche 16 abzulegen. Das als Dünger ausgebildete Ausbringmaterial kann in einem Bandablagebetrieb in Form eines Materialbandes 38 und in einem Portionsablagebetrieb in Form von Materialportionen 40 auf die landwirtschaftliche Nutzfläche 16 abgelegt werden.

In dem zentralen Flächenabschnitt 18a soll das Ausbringmaterial in Form von Materialportionen 40 abgelegt werden. In dem um den Flächenabschnitt 18a umlaufenden Flächenabschnitt 18b soll das Ausbringmaterial in Form eines Materialbandes 38 abgelegt werden.

Durch Berührung des Touchscreens im Bereich der Flächenabschnitte 18a, 18b können Einstellfenster 20a, 20b geöffnet werden. Die Einstellfenster 20a, 20b umfassen jeweils zwei Auswahlfelder 22a, 22b. Durch Berührung des Auswahlfeldes 22a kann festgelegt werden, dass die landwirtschaftliche Ausbringmaschine in dem ausgewählten Flächenabschnitt 18a, 18b in dem Bandablagebetrieb betrieben werden soll. Durch Berührung des Auswahlfeldes 22b kann festgelegt werden, dass die landwirtschaftliche Nutzfläche in dem ausgewählten Flächenabschnitt 18a, 18b in dem Portionsablagebetrieb betrieben werden soll. Über die Auswahlfelder 22a, 22b kann den Flächenabschnitten 18a, 18b also eine Ablageart zugewiesen werden. In den Einstellfenstern 20a, 20b befinden sich ferner Eingabefelder 24a, 24b, über welche dem jeweiligen Flächenabschnitt 18a, 18b eine flächenbezogene Sollausbringmenge in der Einheit kg/ha zugewiesen werden kann.

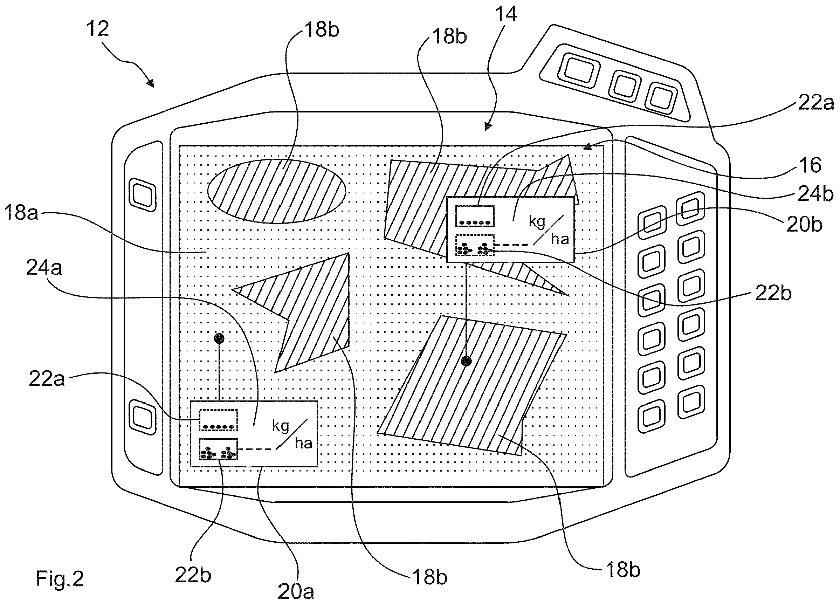

Die Fig. 2 zeigt eine Steuerungseinrichtung 12, wobei die zu bearbeitende landwirtschaftliche Nutzfläche 16 über eine als Touchscreen ausgebildete Eingabevorrichtung 14 der Steuerungseinrichtung 12 angezeigt wird. Die landwirtschaftliche Nutzfläche 16 umfasst mehrere Flächenabschnitte 18b, in welchen die landwirtschaftliche Ausbringmaschine im Bandablagebetrieb betrieben werden soll, sodass das Ausbringmaterial in Form eines Materialbandes abgelegt wird. Über eine Berührung der Flächenabschnitte 18a, 18b kann der Maschinenbediener den jeweiligen Flächenabschnitten wieder einen Ablagebetrieb und eine Sollausbringmenge zuordnen. Hinsichtlich des Ablagebetriebs kann der Maschinenbediener zwischen dem Bandablagebetrieb, bei welchem das Ausbringmaterial in Form eines Materialbandes 38 abgelegt wird, und dem Portionsablagebetrieb, bei welchem das Ausbringmaterial in Form von Materialportionen 40 abgelegt wird, wählen. Die Sollausbringmenge ist in kg/ha einzugeben.

Die Steuerungseinrichtung 12 speichert eine sich auf die flächenbezogene Sollausbringmenge Bandablageeinstellvorgabe 30 für die Materialausbringung im Bandablagebetrieb und eine sich auf die flächenbezogene Sollausbringmenge beziehende Portionsablageeinstellvorgabe 32 für die Materialausbringung im Portionsablagebetrieb.

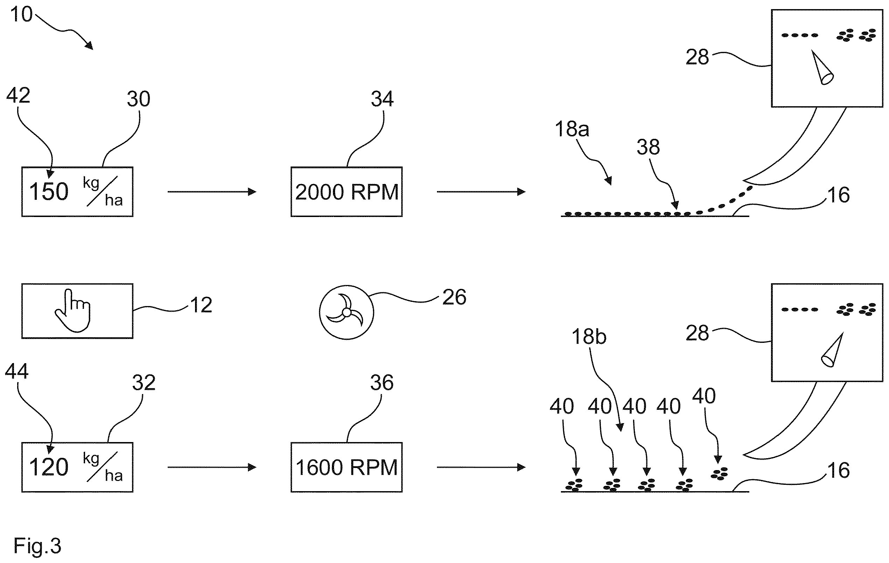

Die Fig. 3 zeigt ein System 10 zum Einstellen der Materialausbringung einer landwirtschaftlichen Ausbringmaschine. Das System 10 umfasst eine als Bedienterminal ausgebildete Steuerungseinrichtung 12, eine als Gebläse ausgebildete Materialfördereinrichtung 26 und eine Dosiereinrichtung 28, wobei die Dosiereinrichtung 28 zur Umsetzung des Bandablagebetriebs in einem Bandablagebetriebsmodus und zur Umsetzung des Portionierablagebetriebs in einem Portionierbetriebsmodus betrieben werden kann. Die Steuerungseinrichtung 12 steuert die Materialfördereinrichtung 26 zum maschineninternen Fördern des Ausbringmaterials an. Die Materialfördereinrichtung 26 wird im Bandablagebetrieb in Abhängigkeit einer Bandablageeinstellvorgabe 30 und im Portionsablagebetrieb in Abhängigkeit einer Portionsablageeinstellvorgabe 32 von der Steuerungseinrichtung 12 angesteuert.

Zum Speichern der Bandablageeinstellvorgabe 30 verarbeitet die Steuerungseinrichtung 12 eine sich auf die flächenbezogene Sollausbringmenge für die Materialausbringung im Bandablagebetrieb beziehende Benutzereingabe. Zum Speichern der Portionsablageeinstellvorgabe 32 verarbeitet die Steuerungseinrichtung 12 eine sich auf die flächenbezogene Sollausbringmenge für die Materialausbringung im Portionsablagebetrieb beziehende Benutzereingabe. Die sich auf die flächenbezogene Sollausbringmenge beziehende Benutzereingabe für die Materialausbringung im Bandablagebetrieb ist ein sich auf eine flächenbezogene Sollausbringmenge beziehender Mengeneinstellwert 42, vorliegend 150 kg/ha. Die sich auf die flächenbezogene Sollausbringmenge beziehende Benutzereingabe für die Materialausbringung im Portionsablagebetrieb ist vorliegend ein sich auf eine flächenbezogene Sollausbringmenge beziehender Mengeneinstellwert 44, nämlich 120 kg/ha. Die Steuerungseinrichtung 12 leitet aus der Bandablageeinstellvorgabe 30 eine Gebläsedrehzahlvorgabe 34 ab, welche von der Steuerungseinrichtung 12 im Bandablagebetrieb eingestellt wird. Die Gebläsedrehzahlvorgabe 34 für den Bandablagebetrieb ist vorliegend 2000 U/min. Aus der Portionsablageeinstellvorgabe 32 leitet die Steuerungseinrichtung 12 eine Gebläsedrehzahlvorgabe 36 ab, welche von der Steuerungseinrichtung 12 im Portionsablagebetrieb eingestellt wird. Die Gebläsedrehzahlvorgabe 36 für den Portionsablagebetrieb ist vorliegend 1600 U/min.

Wenn sich die landwirtschaftliche Ausbringmaschine in einem Flächenabschnitt 18a befindet, in welchem das Ausbringmaterial in Form eines Materialbandes 38 ausgebracht werden soll, werden die Dosiereinrichtungen 28 der landwirtschaftlichen Ausbringmaschine derart mit Ausbringmaterial versorgt, dass 150 kg/ha ausgebracht werden. Wenn sich die landwirtschaftliche Ausbringmaschine in einem Flächenabschnitt 18b befindet, in welchem das Ausbringmaterial in Form von Materialportionen 40 abgelegt werden soll, werden die Dosiereinrichtungen 28 der landwirtschaftlichen Ausbringmaschine also derart mit Ausbringmaterial versorgt, dass 120 kg/ha an Ausbringmaterial auf die landwirtschaftliche Nutzfläche abgelegt werden.

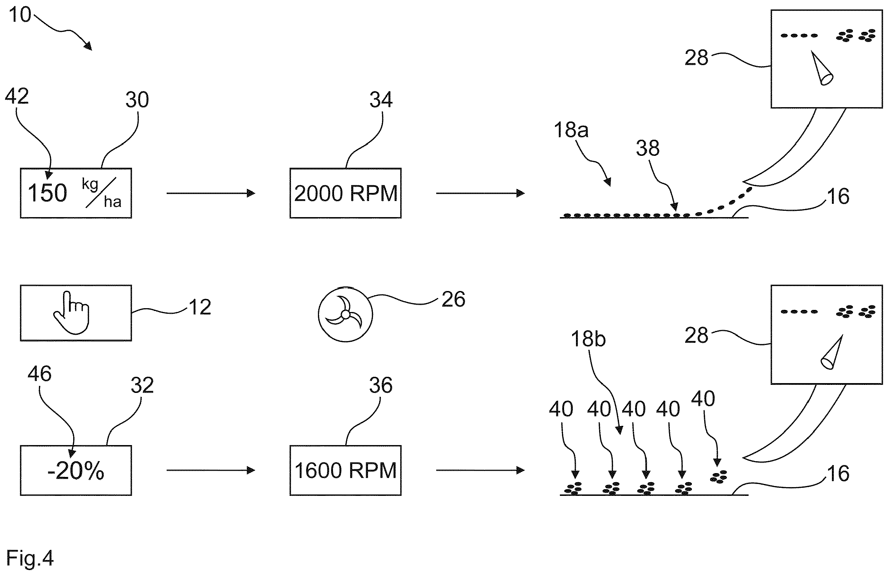

Bei dem in der Fig. 4 dargestellten System 10 betrifft die sich auf die flächenbezogene Sollausbringmenge beziehende Portionsablageeinstellvorgabe 32 für die Materialausbringung im Portionsablagebetrieb einen Änderungswert 46, nämlich -20%. Durch die Eingabemöglichkeit eines Änderungswerts 46 kann der Maschinenbediener vorgeben, dass im Portionsablagebetrieb ein vorgegebener Prozentbetrag weniger an Ausbringmaterial ausgebracht werden soll als im Bandablagebetrieb. Alternativ wäre denkbar, dass der Maschinenbediener durch den Änderungswert 46 vorgibt, dass im Portionsablagebetrieb ein vorgegebener Prozentbetrag mehr an Ausbringmaterial ausgebracht werden soll als im Bandablagebetrieb. Vorliegend soll im Portionsablagebetrieb 20% weniger Ausbringmaterial auf die landwirtschaftliche Nutzfläche pro Hektar ausgebracht werden als im Bandablagebetrieb. Im Bandablagebetrieb sollen 150 kg/ha ausgebracht werden, im Portionsablagebetrieb sollen folglich lediglich 120 kg/ha ausgebracht werden. Alternativ oder zusätzlich ist es in einer nicht gezeigten Ausführungsform denkbar, dass die Bandablageeinstellvorgabe 30 für die Materialausbringung im Bandablagebetrieb einen Änderungswert 46 betrifft. Durch die Eingabemöglichkeit dieses Änderungswerts 46 kann der Maschinenbediener vorgeben, dass im Bandablagebetrieb ein vorgegebener Prozentbetrag mehr oder weniger, bspw. +/-20%, an Ausbringmaterial ausgebracht werden soll als im Portionsablagebetrieb.

Die Steuerungseinrichtung 12 leitet aus den Einstellvorgaben 30, 32 Gebläsedrehzahlvorgaben 34, 36 ab, sodass die Dosiereinrichtungen 28 im Bandablagebetrieb und im Portionsablagebetrieb mit der beabsichtigten Menge an Ausbringmaterial beschickt werden.

Bei den in den Fig. 3 und 4 dargestellten Systemen 10 schaltet die Steuerungseinrichtung 12 während der Ausbringung des Ausbringmaterials zwischen dem Bandablagebetrieb, in welchem die Materialfördereinrichtung 26 in Abhängigkeit der Bandablageeinstellvorgabe 30 angesteuert wird, und dem Portionsablagebetrieb, in welchem die Materialfördereinrichtung 26 in Abhängigkeit der Portionsablageeinstellvorgabe 32 angesteuert wird, um. Das Umschalten zwischen dem Bandablagebetrieb und dem Portionsablagebetrieb kann durch eine die Umschaltung betreffende Steuerungsmaßnahme des Maschinenbedieners veranlasst werden.

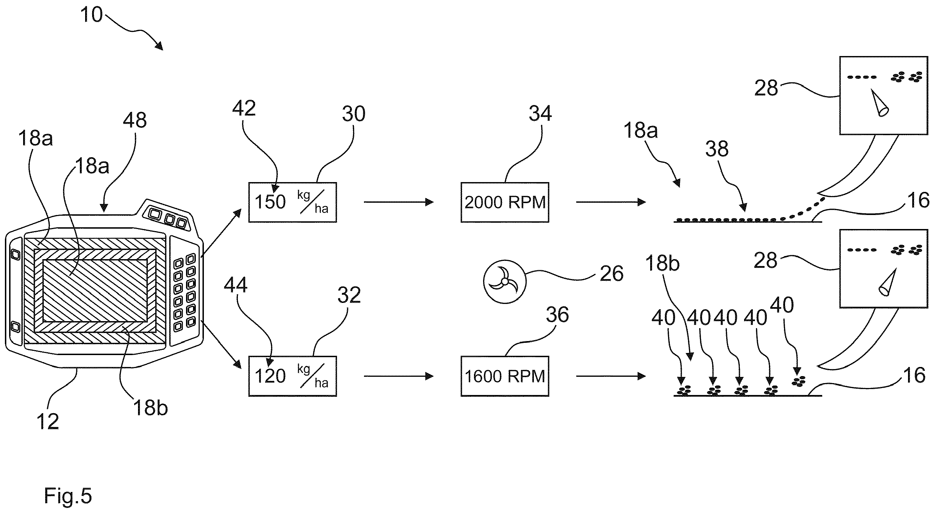

Die Fig. 5 zeigt ein System 10, bei welchem das Umschalten zwischen dem Bandablagebetrieb und dem Portionsablagebetrieb selbsttätig und unter Berücksichtigung von Ablageinformationen aus einer Applikationskarte 48 durch die Steuerungseinrichtung 12 veranlasst wird. Die Ablageinformationen aus der Applikationskarte 48 weisen Flächenabschnitte 18a, 18b aus, wobei in den Flächenabschnitten 18a das Ausbringmaterial im Band ausgebracht werden soll und im Flächenabschnitt 18b das Ausbringmaterial portionsweise ausgebracht werden soll. In der Applikationskarte 48 sind ferner Mengeneinstellwerte 42, 44 hinterlegt, welche die Steuerungseinrichtung 12 als Bandablageeinstellvorgabe 30 und als Portionsablageeinstellvorgabe 32 speichert.

In der Applikationskarte 48 werden also mehrere Flächenabschnitte 18a, 18b ausgewiesen, wobei den ausgewiesenen Flächenabschnitten 18a, 18b ein Ablagebetrieb und eine flächenbezogene Sollausbringmenge zugeordnet ist. Unter Berücksichtigung der Applikationskarte 48 und der aktuellen Position der Ausbringmaschine kann die Steuerungseinrichtung 12 also selbsttätig ein Umschalten zwischen Bandablagebetrieb und Portionsablagebetrieb veranlassen und in den jeweiligen Ablagebetrieben geeignete flächenbezogene Sollausbringmengen einstellen. Diesbezügliche Steuerungseingaben des Maschinenbedieners sind also nicht mehr erforderlich.

### Bezugszeichenliste

- 10: System
- 12: Steuerungseinrichtung
- 14: Eingabevorrichtung
- 16: Nutzfläche
- 18a, 18b: Flächenabschnitte
- 20a, 20b: Einstellfenster
- 22a, 22b: Auswahlfelder
- 24a, 24b: Eingabefelder
- 26: Materialfördereinrichtung
- 28: Dosiereinrichtung
- 30: Bandablageeinstellvorgabe
- 32: Portionsablageeinstellvorgabe
- 34: Gebläsedrehzahlvorgabe
- 36: Gebläsedrehzahlvorgabe
- 38: Materialband
- 40: Materialportionen
- 42: Mengeneinstellwert
- 44: Mengeneinstellwert
- 46: Änderungswert
- 48: Applikationskarte

## Patentansprüche

1. Verfahren zum Einstellen der Materialausbringung einer landwirtschaftlichen Ausbringmaschine mittels einer Steuerungseinrichtung (12), wobei mit der landwirtschaftlichen Ausbringmaschine Ausbringmaterial in einem Bandablagebetrieb in Form eines Materialbandes (38) und in einem Portionsablagebetrieb in Form von Materialportionen (40) auf die landwirtschaftliche Nutzfläche (16) ablegbar ist,
wobei die Steuerungseinrichtung (12) eine sich auf eine flächenbezogene Sollausbringmenge beziehende Bandablageeinstellvorgabe (30) für die Materialausbringung im Bandablagebetrieb speichert;
**dadurch gekennzeichnet, dass** die Steuerungseinrichtung (12) eine sich auf eine flächenbezogene Sollausbringmenge beziehende und sich von der Bandablageeinstellvorgabe (30) unterscheidende Portionsablageeinstellvorgabe (32) für die Materialausbringung im Portionsablagebetrieb speichert.

2. Verfahren nach Anspruch 1,
**dadurch gekennzeichnet, dass** die Steuerungseinrichtung (12) eine Materialfördereinrichtung (26) zum maschineninternen Fördern des Ausbringmaterials steuert,
wobei die Steuerungseinrichtung (12) die Materialfördereinrichtung (26) im Bandablagebetrieb in Abhängigkeit der Bandablageeinstellvorgabe (30) und im Portionsablagebetrieb in Abhängigkeit der Portionsablageeinstellvorgabe (32) ansteuert.

3. Verfahren nach Anspruch 2,
**dadurch gekennzeichnet, dass** die Steuerungseinrichtung (12) während einer Ausbringung von Ausbringmaterial zwischen dem Bandablagebetrieb, in welchem die Materialfördereinrichtung (26) in Abhängigkeit der Bandablageeinstellvorgabe (30) angesteuert wird, und dem Portionsablagebetrieb, in welchem die Materialfördereinrichtung (26) in Abhängigkeit der Portionsablageeinstellvorgabe (32) angesteuert wird, umschaltet.

4. Verfahren nach Anspruch 3,
**dadurch gekennzeichnet, dass**
- das Umschalten zwischen dem Bandablagebetrieb und dem Portionsablagebetrieb selbsttätig, insbesondere unter Berücksichtigung von Ablageinformationen aus einer Applikationskarte (48), durch die Steuerungseinrichtung (12) veranlasst wird; und/oder
- das Umschalten zwischen dem Bandablagebetrieb und dem Portionsablagebetrieb durch eine die Umschaltung betreffende Steuerungsmaßnahme des Maschinenbedieners veranlasst wird.

5. Verfahren nach Anspruch 3 oder 4,
**dadurch gekennzeichnet, dass** die Steuerungseinrichtung (12) die sich durch das Umschalten zwischen dem Bandablagebetrieb und dem Portionsablagebetrieb während der Materialausbringung ergebende Mengendifferenz an für die landwirtschaftliche Nutzfläche (16) erforderlichem Ausbringmaterial ermittelt.

6. Verfahren nach einem der vorstehenden Ansprüche,
**dadurch gekennzeichnet, dass** die Steuerungseinrichtung (12)
- zum Speichern der Bandablageeinstellvorgabe (30) eine sich auf die flächenbezogene Sollausbringmenge für die Materialausbringung im Bandablagebetrieb beziehende Benutzereingabe verarbeitet; und/oder
- zum Speichern der Portionsablageeinstellvorgabe (32) eine sich auf die flächenbezogene Sollausbringmenge für die Materialausbringung im Portionsablagebetrieb beziehende Benutzereingabe verarbeitet.

7. Verfahren nach einem der vorstehenden Ansprüche,
**dadurch gekennzeichnet, dass** die Steuerungseinrichtung (12)
- zum Speichern der Bandablageeinstellvorgabe (30) einen sich auf die flächenbezogene Sollausbringmenge für die Materialausbringung im Bandablagebetrieb beziehenden Eintrag in einer Applikationskarte (48) verarbeitet; und/oder
- zum Speichern der Portionsablageeinstellvorgabe (32) einen sich auf die flächenbezogene Sollausbringmenge für die Materialausbringung im Portionsablagebetrieb beziehenden Eintrag in einer Applikationskarte (48) verarbeitet.

8. System (10) zum Einstellen der Materialausbringung einer landwirtschaftlichen Ausbringmaschine, mit welcher Ausbringmaterial in einem Bandablagebetrieb in Form eines Materialbandes (38) und in einem Portionsablagebetrieb in Form von Materialportionen (40) auf die landwirtschaftliche Nutzfläche (16) ablegbar ist, mit
- einer Steuerungseinrichtung (12), welche dazu eingerichtet ist, eine sich auf die flächenbezogene Sollausbringmenge beziehende Bandablageeinstellvorgabe (30) für die Materialausbringung im Bandablagebetrieb zu speichern;
**dadurch gekennzeichnet, dass** die Steuerungseinrichtung (12) dazu eingerichtet ist, eine sich auf die flächenbezogene Sollausbringmenge beziehende und sich von der Bandablageeinstellvorgabe (30) unterscheidende Portionsablageeinstellvorgabe (32) für die Materialausbringung im Portionsablagebetrieb zu speichern.

9. System (10) nach Anspruch 8,
**gekennzeichnet durch** eine Materialfördereinrichtung (26) zum maschineninternen Fördern des Ausbringmaterials,
wobei die Steuerungseinrichtung (12) dazu eingerichtet ist, die Materialfördereinrichtung (26) im Bandablagebetrieb in Abhängigkeit der Bandablageeinstellvorgabe (30) und im Portionsablagebetrieb in Abhängigkeit der Portionsablageeinstellvorgabe (32) anzusteuern.

10. System (10) nach Anspruch 9,
**dadurch gekennzeichnet, dass** die Steuerungseinrichtung (12) dazu eingerichtet ist, während einer Ausbringung von Ausbringmaterial, insbesondere selbsttätig und/oder auf Grundlage einer Steuerungsmaßnahme eines Maschinenbedieners, zwischen dem Bandablagebetrieb, in welchem die Materialfördereinrichtung (26) in Abhängigkeit der Bandablageeinstellvorgabe (30) angesteuert wird, und dem Portionsablagebetrieb, in welchem die Materialfördereinrichtung (26) in Abhängigkeit der Portionsablageeinstellvorgabe (32) angesteuert wird, umzuschalten.

11. System (10) nach einem der Ansprüche 8 bis 10,
**dadurch gekennzeichnet, dass** die Steuerungseinrichtung (12) eine Eingabevorrichtung (14) für Benutzereingaben umfasst, wobei die Steuerungseinrichtung (12) dazu eingerichtet ist, Eingabefelder (24a, 24b) für
- eine sich auf die flächenbezogene Sollausbringmenge für die Materialausbringung im Bandablagebetrieb beziehende Benutzereingabe; und
- eine sich auf die flächenbezogene Sollausbringmenge für die Materialausbringung im Portionsablagebetrieb beziehende Benutzereingabe
bereitzustellen.

12. System (10) nach Anspruch 11,
**dadurch gekennzeichnet, dass** die Steuerungseinrichtung (12) dazu eingerichtet ist,
- die sich auf die flächenbezogene Sollausbringmenge für die Materialausbringung im Bandablagebetrieb beziehende Benutzereingabe zum Ermitteln der Bandablageeinstellvorgabe (30) zu verarbeiten; und/oder
- die sich auf die flächenbezogene Sollausbringmenge für die Materialausbringung im Portionsablagebetrieb beziehende Benutzereingabe zum Ermitteln der Portionsablageeinstellvorgabe (32) zu verarbeiten.

13. System (10) nach einem der Ansprüche 8 bis 12,
**dadurch gekennzeichnet, dass** die Steuerungseinrichtung (12) dazu eingerichtet ist,
- einen sich auf die flächenbezogene Sollausbringmenge für die Materialausbringung im Bandablagebetrieb beziehenden Eintrag in einer Applikationskarte (48) zum Ermitteln der Bandablageeinstellvorgabe (30) zu verarbeiten; und/oder
- einen sich auf die flächenbezogene Sollausbringmenge für die Materialausbringung im Portionsablagebetrieb beziehenden Eintrag in einer Applikationskarte (48) zum Ermitteln der Portionsablageeinstellvorgabe (32) zu verarbeiten.
